(19) Europäisches Patentamt
European Patent Office
Office européen des brevets

(11) EP 3 673 988 A1

(12) EUROPEAN PATENT APPLICATION
published in accordance with Art. 153(4) EPC

(43) Date of publication:
01.07.2020 Bulletin 2020/27

(51) Int Cl.:
B01J 20/28 (2006.01)          B01J 20/26 (2006.01)
D04H 1/72 (2012.01)          G01N 30/00 (2006.01)

(21) Application number: 18823844.8

(22) Date of filing: 28.06.2018

(86) International application number:
PCT/JP2018/024743

(87) International publication number:
WO 2019/004407 (03.01.2019 Gazette 2019/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:  30.06.2017  US 201762527761 P

(71) Applicant: M-Techx Inc.
Chuo-ku
Tokyo 104-0033 (JP)

(72) Inventors:
• SOTA Hiroyoshi
Tokyo 150-0011 (JP)

• IKEGAYA Morihiko
Tokyo 150-0011 (JP)
• URABE Kenichi
Tokyo 150-0011 (JP)
• ECHIZENYA Takatsugu
Tokyo 150-0011 (JP)
• HIROGAKI Toshiki
Kyotanabe-shi
Kyoto 610-0394 (JP)
• WU Wei
Kyotanabe-shi
Kyoto 610-0394 (JP)
• ISHII Yoshiaki
Tokyo 150-0011 (JP)

(74) Representative: Schön, Christoph
Dr. Schön, Neymeyr & Partner mbB
Bavariaring 26
80336 München (DE)

(54) **NANOFIBER AGGREGATE FOR FAT ADSORPTION, METHOD FOR ESTIMATING FAT ADSORPTION RATE OF NANOFIBER AGGREGATE FOR FAT ADSORPTION, AND METHOD FOR ESTIMATING VOLUME OF NANOFIBER AGGREGATE FOR FAT ADSORPTION FOLLOWING FAT ADSORPTION**

(57)    An oil and fat adsorbing nanofiber laminate in which an oil suction rate is secured and a suction speed is effectively increased, a method for estimating an oil and fat suction rate of an oil and fat adsorbing nanofiber aggregate, and a method for estimating a volume after oil and fat adsorption are provided. An oil and fat adsorbing nanofiber aggregate 1 has an average fiber diameter d of 1000 nm or more and 2000 nm or less and a bulk density $\rho_b$ of 0.01 g/cm$^3$ or more and 0.2 g/cm3 or less. The oil and fat adsorbing nanofiber aggregate 1 is capable of securing a suction rate of oil and fat and effectively increasing a suction speed.

EP 3 673 988 A1

Fig. 9

（a）

（b）

**Description**

Technical Field

The present invention relates to a nanofiber aggregate used for oil and fat adsorption, a method for estimating an oil and fat suction rate of an oil and fat adsorbing nanofiber aggregate, and a method for estimating a volume after oil and fat adsorption.

Background Art

Oil and fat adsorbing materials are used for, for example, adsorption and removal of oils on a water surface, such as a sea surface, a lake surface, a pond surface, a river surface, and a reservoir surface, and oils spilled on a floor, a road, and the like. Oil and fat adsorbing materials are also used for adsorption and removal of oil and fat in contaminated water from kitchens of cafeterias, restaurants, and the like.

PTL 1 discloses a conventional oil and fat adsorbing material. The oil and fat adsorbing material is a laminate of polypropylene fibers with a fiber diameter from 100 nm to 500 nm.

Citation List

Patent Literature

PTL 1: JP 2013-184095 A

Summary of Invention

Technical Problem

Indicators of performance of such an oil and fat adsorbing material include a ratio of an adsorbable amount of oil and fat to its own weight (suction rate). Another example of the indicators is a suction speed of oil and fat. Since oil and fat adsorbing materials with low suction speeds have poor operating efficiency and are limited in occasions to be used in actual operation, oil and fat adsorbing materials are expected to have higher suction speeds.

It is thus an object of the present invention to provide an oil and fat adsorbing nanofiber laminate in which a suction rate of oil and fat is secured and a suction speed is effectively increased, a method for estimating an oil and fat suction rate of an oil and fat adsorbing nanofiber aggregate, and a method for estimating a volume after oil and fat adsorption.

Solution to Problem

The present inventors focused on an average fiber diameter and a bulk density of a nanofiber aggregate used for oil and fat adsorption and made intensive investigation on relationship of these parameters with a suction rate and a suction speed. As a result, they found an average fiber diameter and a bulk density allowing an adsorption amount and a suction speed of oil and fat to be achieved at a high level and thus completed the present invention.

To achieve the above object, an oil and fat adsorbing nanofiber aggregate according to an aspect of the present invention is an oil and fat adsorbing nanofiber aggregate, wherein

the oil and fat adsorbing nanofiber aggregate satisfies formulae (i) and (ii) below where the oil and fat adsorbing nanofiber aggregate has an average fiber diameter of d and a bulk density of $\rho_b$.

$$\text{(i)} \qquad 1000 \text{ nm} \leq d \leq 2000 \text{ nm}$$

$$\text{(ii)} \qquad 0.01 \text{ g/cm}^3 \leq \rho_b \leq 0.2 \text{ g/cm}^3$$

The present invention preferably further satisfies a formula (i') below.

$$\text{(i')} \qquad 1300 \text{ nm} \leq d \leq 1700 \text{ nm}$$

The present invention preferably further satisfies a formula (ii') below.

$$(ii') \quad 0.01 \text{ g/cm}^3 \leq \rho_b \leq 0.05 \text{ g/cm}^3$$

The present invention preferably further satisfies a formula (iii) below where the oil and fat adsorbing nanofiber aggregate has a thickness of t.

$$(iii) \quad 2 \text{ mm} \leq t \leq 5 \text{ mm}$$

To achieve the above object, a method for estimating an oil and fat suction rate according to an aspect of the present invention estimates an oil and fat suction rate M/m indicating a ratio of a mass M after oil and fat adsorption to a mass m before oil and fat adsorption in an oil and fat adsorbing nanofiber aggregate, wherein the method estimates the oil and fat suction rate M/m by a formula (iv) below using a porosity $\eta$ of the oil and fat adsorbing nanofiber aggregate, a density $\rho$ of a fiber to constitute the oil and fat adsorbing nanofiber aggregate, and an oil and fat density $\rho_o$.
[Math 1]

$$(iv) \quad \frac{M}{m} = 1 + \frac{\eta \rho_o}{(1-\eta)\rho}$$

To achieve the above object, a method for estimating a volume after oil and fat adsorption according to an aspect of the present invention estimates a volume V after oil and fat adsorption in an oil and fat adsorbing nanofiber aggregate, wherein the method estimates an oil and fat suction rate M/m indicating a ratio of a mass M after oil and fat adsorption to a mass m before oil and fat adsorption in the oil and fat adsorbing nanofiber aggregate by a formula (iv) below using a porosity $\eta$ of the oil and fat adsorbing nanofiber aggregate, a density $\rho$ of a fiber to constitute the oil and fat adsorbing nanofiber aggregate, and an oil and fat density $\rho_o$ and the method estimates the volume V after oil and fat adsorption by a formula (v) below using the estimate of the oil and fat suction rate M/m, the mass m before oil and fat adsorption in the oil and fat adsorbing nanofiber aggregate, the density $\rho$ of the fiber to constitute the oil and fat adsorbing nanofiber aggregate, the oil and fat density $\rho_o$.
[Math 2]

$$(iv) \quad \frac{M}{m} = 1 + \frac{\eta \rho_o}{(1-\eta)\rho}$$

[Math 3]

$$(v) \quad V = \frac{(M/m)m - m}{\rho_o} + \frac{m}{\rho}$$

Advantageous Effects of Invention

According to the present invention, it is possible to secure the suction rate of oil and fat and effectively increase the suction speed.
In addition, according to the present invention, it is possible to predict (estimate) the oil and fat suction rate using parameters (porosity, fiber density, and oil and fat density) allowed to be obtained before oil and fat adsorption.
Still in addition, according to the present invention, it is possible to predict (estimate) the volume after oil and fat adsorption using parameters (porosity, fiber density, oil and fat density, and mass before oil and fat adsorption) allowed to be obtained before oil and fat adsorption.

Brief Description of the Drawings

Figs. 1 are illustrations of an oil and fat adsorbing nanofiber aggregate according to an embodiment of the present invention.

Fig. 2 is a perspective view illustrating an example of a production device used for preparation of the oil and fat adsorbing nanofiber aggregate in Figs. 1.

Fig. 3 is a side view including a partial cross section of the production device in Fig. 2.

Fig. 4 is a front view of a collecting net for deposition of nanofibers by the production device in Fig. 2.

Figs. 5 are diagrams illustrating a structural model of a fiber aggregate.

Figs. 6 are diagrams of the model in Figs. 5 taken from directions of the respective axes.

Fig. 7 is a graph illustrating relationship between porosity and interfiber distance in fiber aggregates.

Fig. 8 is a diagram schematically illustrating a state of oil and fat sucked up by a fiber aggregate.

Figs. 9 are graphs illustrating relationship between average fiber system and suction rate in fiber aggregates.

Fig. 10 is a graph illustrating relationship between test piece thickness and suction rate in fiber aggregates.

Fig. 11 is a graph illustrating relationship of average fiber system with coefficient growth rate and volume expansion ratio in fiber aggregates.

Fig. 12 is a graph illustrating relationship between bulk density and suction rate in fiber aggregates.

Fig. 13 is a graph illustrating relationship between suction time and suction height in fiber aggregates.

Fig. 14 is a graph illustrating relationship between volume expansion ratio and suction rate in fiber aggregates.

Fig. 15 is a graph illustrating relationship between porosity and suction rate in fiber aggregates.

Description of Embodiments

An oil and fat adsorbing nanofiber aggregate according to an embodiment of the present invention is described below.

Composition of Oil and Fat Adsorbing Nanofiber Aggregate

The composition of an oil and fat adsorbing nanofiber aggregate in the present embodiment is described first.

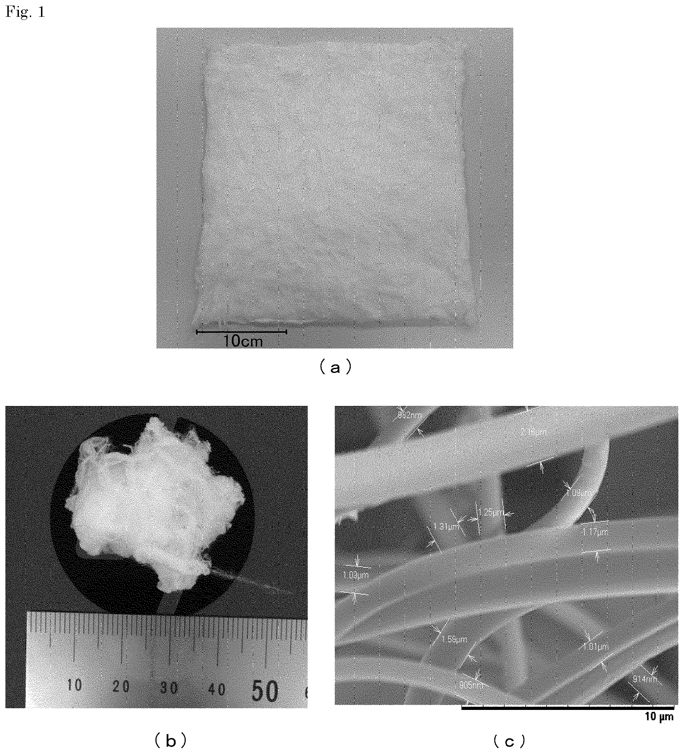

Figs. 1 are illustrations of an oil and fat adsorbing nanofiber aggregate according to an embodiment of the present invention. Specifically, Fig. 1A is a front photograph of an example of the oil and fat adsorbing nanofiber aggregate. Fig. 1B is a photograph of an example of a non- formed nanofiber aggregate. Fig. 1C is an enlarged photograph of an example of the oil and fat adsorbing nanofiber aggregate taken with an electron microscope.

An oil and fat adsorbing nanofiber aggregate 1 in the present embodiment is used for an oil and fat adsorption device that adsorbs and removes oil and fat in contaminated water from kitchens of cafeterias, restaurants, and the like. Such a device is generally referred to as a grease trap. It is required to release contaminated water from food service kitchens of restaurants, hotels, cafeterias, food service providers, and the like after purified with such a grease trap. The oil and fat adsorbing nanofiber aggregate 1 is also useful for adsorption of oils on a water surface, such as a sea surface, a lake surface, a pond surface, a river surface, and a reservoir surface, and oils spilled on a floor, a road, and the like.

The oil and fat adsorbing nanofiber aggregate 1 is composed by aggregating fine fibers with a fiber diameter on the order of nanometers, so-called nanofibers. The oil and fat adsorbing nanofiber aggregate 1 has an average fiber diameter from 1000 nm to 2000 nm and particularly preferably an average fiber diameter of 1500 nm. The oil and fat adsorbing nanofiber aggregate 1 is formed in, for example, a square mat shape as illustrated in Fig. 1A. The oil and fat adsorbing nanofiber aggregate 1 may be formed in a shape in accordance with usage and the like, such as a circular shape, a hexagonal shape, or the like other than a square shape. Fig. 1B illustrates a non-formed aggregate of nanofibers with an average fiber diameter of 1500 nm. Fig. 1C illustrates a state of the nanofiber aggregate with an average fiber diameter of 1500 nm enlarged with an electron microscope.

In the present embodiment, the nanofibers to compose the oil and fat adsorbing nanofiber aggregate 1 is constituted by a synthetic resin. Examples of the synthetic resin include polypropylene (PP), polyethylene terephthalate (PET), and the like. The nanofibers may be constituted by a material other than them.

In particular, polypropylene is water repellent and oil adsorbent. Polypropylene fiber aggregates have performance of adsorbing oil and fat several tens of times more than its own weight. Polypropylene is thus preferred as a material for the oil and fat adsorbing nanofiber aggregate 1. The numerical values disclosed by raw material suppliers as the density (material density) of polypropylene range approximately from 0.85 to 0.95. Polypropylene has a contact angle with oil and fat from 29 degrees to 35 degrees. The density of polypropylene used herein is 0.895 g/cm$^3$.

The oil and fat adsorbing nanofiber aggregate 1 satisfies formulae (i) and (ii) below where the oil and fat adsorbing nanofiber aggregate 1 has an average fiber diameter of d and a bulk density of $\rho_b$.

$$\text{(i)} \qquad 1000 \text{ nm} \leq d \leq 2000 \text{ nm}$$

$$(ii) \qquad 0.01 \text{ g/cm}^3 \leq \rho_b \leq 0.2 \text{ g/cm}^3$$

The oil and fat adsorbing nanofiber aggregate 1 more preferably satisfies formulae (i') and (ii') below.

$$(i') \qquad 1300 \text{ nm} \leq d \leq 1700 \text{ nm}$$

$$(ii') \qquad 0.01 \text{ g/cm}^3 \leq \rho_b \leq 0.05 \text{ g/cm}^3$$

The average fiber diameter is obtained as follows. In the oil and fat adsorbing nanofiber aggregate 1, a plurality of spots are arbitrarily selected and enlarged with an electron microscope. In each spot enlarged with the electron microscope, a plurality of nanofibers are arbitrarily selected to measure the diameters. The diameters of the selected nanofibers are then averaged to be defined as the average fiber diameter. In the present embodiment, five spots are arbitrarily selected in the oil and fat adsorbing nanofiber aggregate 1 and 20 nanofibers are arbitrarily selected in each spot to measure the diameters. Then, the average of the diameters of these 100 nanofibers is defined as the average fiber diameter. The coefficient of variation (value obtained by dividing the standard deviation by the average) is preferably 0.6 or less.

Device and Method of Producing Oil and Fat Adsorbing Nanofiber Aggregate

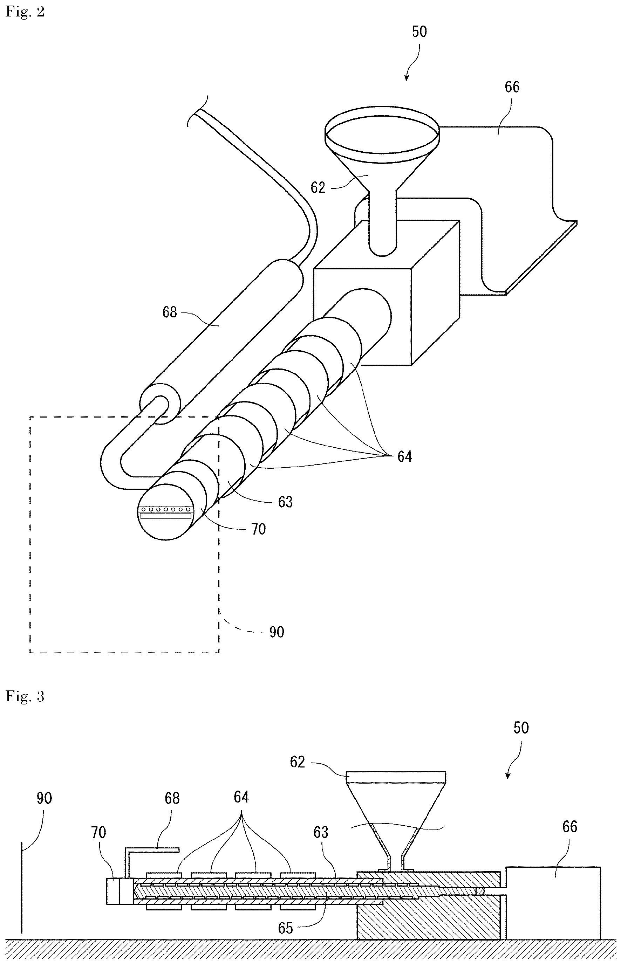

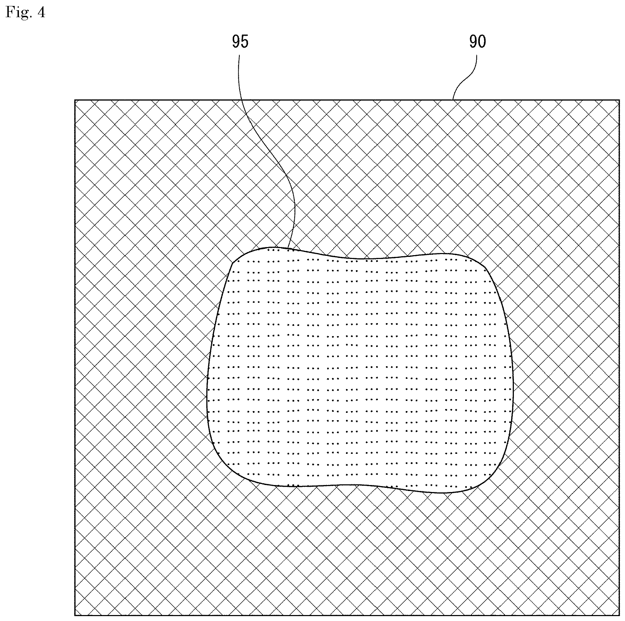

The oil and fat adsorbing nanofiber aggregate 1 in the present embodiment is produced using a production device illustrated in Figs. 2 through 4. Fig. 2 is a perspective view illustrating an example of a production device used for preparation of the oil and fat adsorbing nanofiber aggregate in Figs. 1. Fig. 3 is a side view including a partial cross section of the production device in Fig. 2. Fig. 4 is a front view of a collecting net for deposition of nanofibers produced by the production device in Fig. 2.

As illustrated in Figs. 2 and 3, a production device 50 has a hopper 62, a heating cylinder 63, heaters 64, a screw 65, a motor 66, and a head 70.

Into the hopper 62, a synthetic resin in the form of pellets is fed to be the material for the nanofibers. The heating cylinder 63 is heated by the heaters 64 to melt the resin supplied from the hopper 62. The screw 65 is accommodated in the heating cylinder 63. The screw 65 is rotated by the motor 66 to deliver the molten resin to a distal end of the heating cylinder 63. The head 70 in a cylindrical shape is provided at the distal end of the heating cylinder 63. To the head 70, a gas supply section, not shown, is connected via a gas supply pipe 68. The gas supply pipe 68 is provided with a heater to heat high pressure gas supplied from the gas supply section. The head 70 injects the high pressure gas to the front and also discharges the molten resin so as to be carried on the high pressure gas flow. In front of the head 70, a collecting net 90 is arranged.

Now, operation of the production device 50 in the present embodiment is described. The raw material (resin) in the form of pellets fed into the hopper 62 is supplied into the heating cylinder 63. The resin melted in the heating cylinder 63 is delivered to the distal end of the heating cylinder 63 by the screw 65. The molten resin (molten raw material) reaching the distal end of the heating cylinder 63 is discharged from the head 70. In coincidence with the discharge of the molten resin, high pressure gas is blown from the head 70.

The molten resin discharged from the head 70 intersects with the gas flow at a predetermined angle and is carried forward while being drawn. The drawn resin becomes fine fibers to be aggregated, as illustrated in Fig. 4, on the collecting net 90 arranged in front of the head 70 (aggregation step). The aggregated fine fibers 95 are then formed in a desired shape (e.g., square mat shape) (formation step). The oil and fat adsorbing nanofiber aggregate 1 of the present invention is thus obtained.

It should be noted that, although configured to discharge the "molten raw material" obtained by heating a synthetic resin to be a raw material to melt the resin, the above production device 50 is not limited to this configuration. In addition to this configuration, the production device 50 may be configured to, for example, discharge a "solvent" where a solid or liquid raw material as a solute is dissolved in advance at a predetermined concentration relative to a predetermined solvent. The present applicant discloses, as an example of a production device applicable to production of the oil and fat adsorbing nanofiber aggregate 1, a nanofiber production device and a nanofiber production method in Japanese Patent Application No. 2015-065171. The application was granted a patent (Japanese Patent No. 6047786, filed on March 26, 2015 and registered on December 2, 2016) and the present applicant holds the patent right.

Modeling of Fiber Aggregate

The present inventors attempted to specify the structure of the fiber aggregate having a structure in which many fibers are complexly entangled with each other. The present inventors construed the structure of the fiber aggregate by simplification and developed a model by assuming that the fiber aggregate contains a plurality of fibers extending in three directions orthogonal to each other in a minimum calculation unit in a cubic shape.

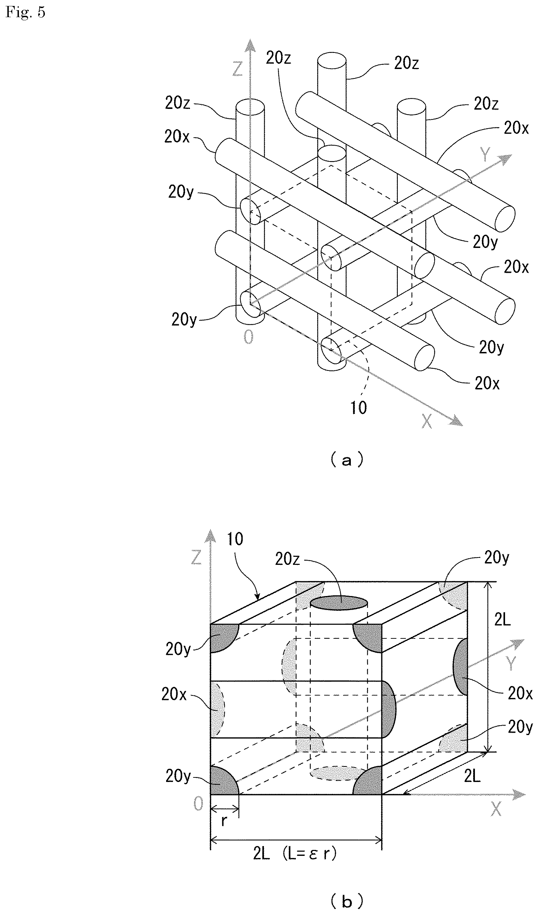

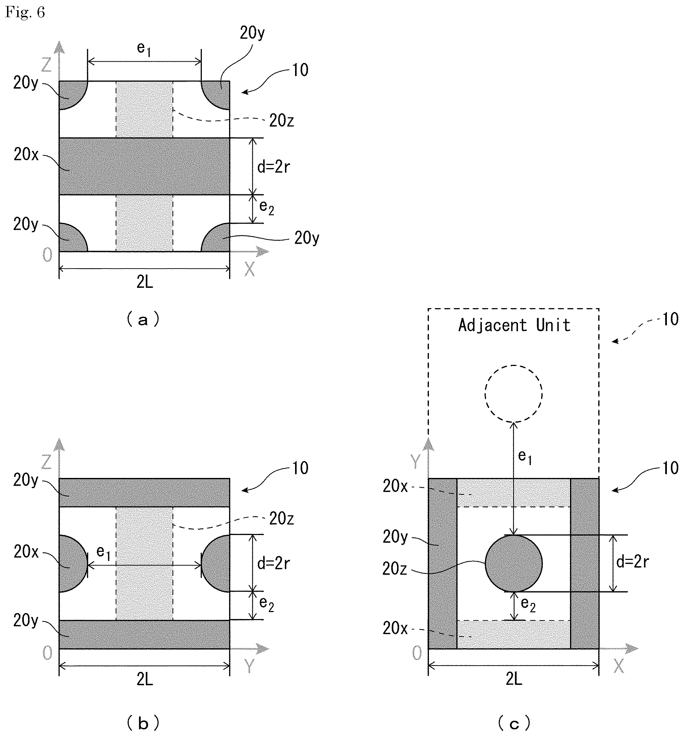

Figs. 5 and 6 illustrate the model thus developed. Fig. 5A is a perspective view illustrating a three-direction model and a unit-calculation unit of the fiber aggregate. Fig. 5B is a perspective view of the minimum calculation unit. Figs. 6A, 6B, and 6C are diagrams of the minimum calculation unit taken from the Y axis direction, the X axis direction, and the Z axis direction. In Fig. 6C, an adjacent minimum calculation unit (adjacent unit) is indicated by a broken line.

As illustrated in Figs. 5 and 6, in a three-dimensional space represented by the X, Y, and Z axes, a minimum calculation unit 10 has a cubic shape with each side 2L in length. The minimum calculation unit 10 includes fiber portions 20x, 20y, and 20z. The fiber portions 20x have the central axis located on two planes in parallel with the X axis and the Z axis and extending in the X axis direction. The fiber portions 20x have a cross-sectional shape of a semicircular shape obtained by bisecting a circle. The fiber portions 20y have the central axis coinciding with four sides in parallel with the Y axis and extending in the Y axis direction. The fiber portions 20y have a cross-sectional shape of a sector obtained by quadrisecting a circle. The fiber portion 20z has the central axis extending in the Z axis direction through two planes in parallel with the X axis and the Y axis. The fiber portion 20z has a cross-sectional shape of a circular shape. The fiber portions 20x, 20y, and 20z are arranged at intervals to each other. The total volume of the fiber portions 20x, the total volume of the fiber portions 20y, and the volume of the fiber portion 20z are identical.

In the minimum calculation unit 10, a length coefficient $\varepsilon$ can be expressed by a formula (1) below where d denotes the fiber diameter, r denotes the fiber radius, and 2L denotes the distance between the central axes of parallel fibers.

[Math 4]

$$\varepsilon = \frac{L}{r} \quad (\varepsilon \geq 1, 2L = 2\varepsilon r = \varepsilon d) \cdots (1)$$

In addition, the relationship of a formula (2) below holds for a mass m of the minimum calculation unit 10, a volume of V, a fiber diameter of d = 2r, and a fiber density of p. It should be noted that the density $\rho$ of each fiber constituting the oil and fat adsorbing nanofiber aggregate 1 in the present embodiment is considered to be equivalent to the density of polypropylene in a solid state. In the calculation using the formulae herein, the density of polypropylene is thus used as the fiber density p.

[Math 5]

$$m = 6\pi r^2 L\rho \cdots (2)$$

The fiber aggregate has a bulk density $\rho_b$ that can be expressed by a formula (3) below.

[Math 6]

$$\rho_b = \frac{m}{V} = \frac{6\pi r^2 L\rho}{8L^3} = \frac{3\pi}{4\varepsilon^2}\rho \cdots (3)$$

The fiber aggregate has a porosity $\eta$ (free volume $\eta$) that can be expressed by a formula (4) below.

[Math 7]

$$\eta = \frac{8L^3 - 6\pi r^2 L}{8L^3} = 1 - \frac{3\pi}{4\varepsilon^2} = 1 - \frac{\rho_b}{\rho} \cdots (4)$$

An interfiber distance $e_1$ (gap $e_1$) can be expressed by a formula (5) below.

[Math 8]

$$e_1 = 2L - 2r = d\left(\sqrt{\frac{3\pi}{4(1-\eta)}} - 1\right) \cdots (5)$$

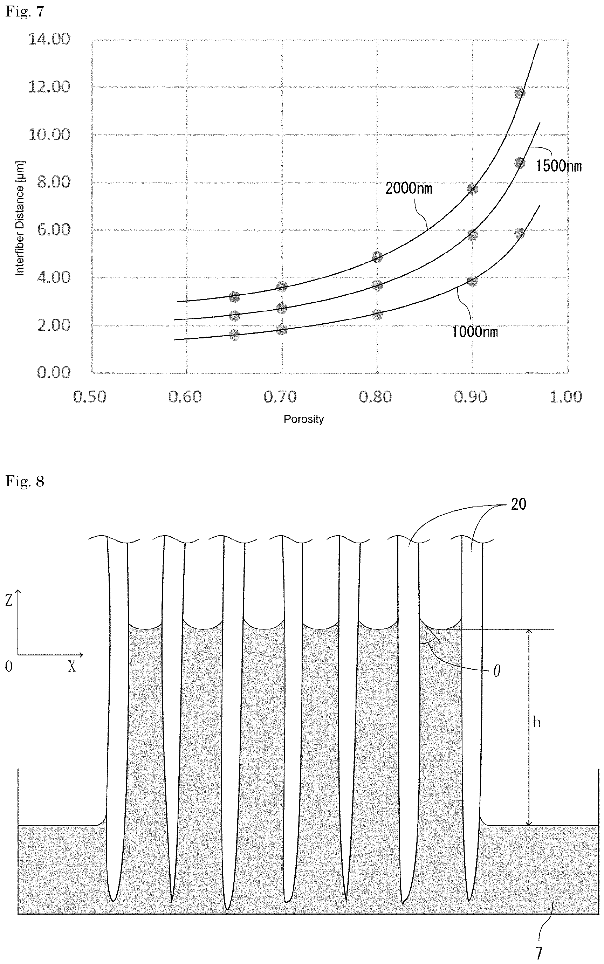

Fig. 7 illustrates a graph created using the result of calculating the formula (5). This graph illustrates the relationship between the porosity $\eta$ and the interfiber distance $e_1$ in each of a plurality of fiber aggregates constituted by fibers with different average fiber diameters d (1000 nm, 1500 nm, 2000 nm).

In the oil and fat adsorbing nanofiber aggregate 1 as a fiber aggregate configured to have an average fiber diameter d of 1000 nm and a bulk density of 0.2 $g/cm^3$ (porosity of 0.7765), the interfiber distance $e_1$ is obtained as 2.3 $\mu$m from the formula (5). In the oil and fat adsorbing nanofiber aggregate 1 configured to have an average fiber diameter d of 2000 nm and a bulk density of 0.01 $g/cm^3$ (porosity of 0.9888), the interfiber distance $e_1$ is obtained as 27.0 $\mu$m from the formula (5).

From Figs. 6A and 8, a formula (6) below holds for a surface tension of oil or fat to be adsorbed of T, a contact angle of the oil or fat of $\theta$, an oil and fat density of $\rho_o$, a gravitational acceleration of g, and a suction height of h when the force in the Z direction (vertical direction) is in equilibrium.
[Math 9]

$$2\pi r T \cos\theta = \{(e_1 + 2r)^2 - \pi r^2\}\rho_o g h \cdots (6)$$

The formula (6) above is based on the following references.

(a) Yuehua YUAN and T. Randall LEE, Contact Angle and Wetting Properties, Surface Science Techniques, ISBN: 978-3-642-34242-4, (2013), pp. 3-34.
(b) Tiina Rasilainen, Controlling water on polypropylene surfaces with micro- and micro/nanostructures, Department of CHEMISTRY, University of Eastern Finland, (2010), pp. 1-42.
(c) Thawatchai Phaechamud and Chirayu Savedkairop, Contact Angle and Surface Tension of Some Solvents Used in Pharmaceuticals, Research Journal of Pharmaceutical, Biological and Chemical Sciences, ISSN: 0975-8585, Vol.3, Issue.4, (2012), pp.513-529.
(d) Keizo OGINO and Ken-ichi SHIGEMURA, Studies of the Removal of Oily Soil by Rolling-up in Detergency. II. On Binary Soil Systems Consisting of Oleic Acid and Liquid Paraffin, BULLETIN OF THE CHEMICAL SOCIETY OF JAPAN, Vol.49 (11), (1976), pp.3236-3238.
(e) Victoria Broje and Arturo A. Keller, Interfacial interactions between hydrocarbon liquids and solid surfaces used in mechanical oil spill recovery, Journal of Colloid and Interface Science, Vol. 305, (2007), pp.286-292.

From the formula (6) above, a suction height h in the Z direction can be obtained by a formula (7) below.
[Math 10]

$$h = \frac{2\pi r T \cos\theta}{\{(e_1 + 2r)^2 - \pi r^2\}\rho_o g} \cdots (7)$$

In addition, a formula (8) below holds for, in the minimum calculation unit 10, a mass before oil and fat adsorption (own weight) of m and a mass after oil and fat adsorption of M.
[Math 11]

$$\frac{M}{m} = 1 + \frac{4\eta\varepsilon^2\rho_o}{3\pi\rho} = 1 + \frac{\eta\rho_o}{(1-\eta)\rho} \cdots (8)$$

The formula (8) enables calculation of an estimate of a suction rate M/m using the porosity $\eta$, the fiber density p, and the oil and fat density $\rho_o$ as parameters allowed to be obtained before oil and fat adsorption.

The volume V after oil and fat adsorption in the minimum calculation unit 10 is a total value of a volume of the oil and fat adsorbing fiber aggregate ($v_{fiber}$) and a volume of adsorbed oil and fat ($v_{oil}$). Where the volume before oil and fat adsorption in the minimum calculation unit 10 is $V_n$, a volume expansion ratio $V/V_n$ can be expressed by formulae (9) and (10) below.

[Math 12]

$$V = v_{oil} + v_{fiber} = \frac{(M/m)m - m}{\rho_o} + \frac{m}{\rho} \cdots (9)$$

The formula (8) above enables estimation of the suction rate M/m and further calculation of the estimate of the volume V after oil and fat adsorption using the mass m before oil and fat adsorption, the fiber density p, and the oil and fat density $\rho_o$ the fiber density as parameters allowed to be obtained before oil and fat adsorption by the formula (9).

[Math 13]

$$\frac{V}{V_n} = \frac{V}{m/\rho_b} = \frac{V\rho(1-\eta)}{\rho_o} = \left(\frac{\varepsilon'}{\varepsilon}\right)^3 \cdots (10)$$

In the formula (10), $\varepsilon$ denotes a length coefficient before oil and fat adsorption in the minimum calculation unit 10 and $\varepsilon'$ denotes a length coefficient after oil and fat adsorption.

Although the respective calculation formulae described above are for the minimum calculation unit 10, the respective calculation formulae are also applicable to the oil and fat adsorbing nanofiber aggregate 1 considering that the oil and fat adsorbing nanofiber aggregate 1 is composed by collecting a number of minimum calculation units 10.

Verification

The present inventors then prepared oil and fat adsorbing nanofiber aggregates in Examples 1-1 through 1-8 and Comparative Examples 1-1, 1-2, 2-1, 2-2, 3-1, 3-2, 4, and 5 of the present invention described below to verify performance on oil and fat adsorption using them.

Examples 1-1 through 1-8

Using the production device 50 described above, fine fibers 95 with an average fiber diameter of 1500 nm were produced from polypropylene as a material. The standard deviation of the fiber diameter was 900 and the coefficient of variation obtained by dividing the standard deviation by the average fiber diameter was 0.60. The deposited fine fibers 95 were formed to have a bulk density of 0.01 [g/cm$^3$], 0.03 [g/cm$^3$], 0.04 [g/cm$^3$], 0.05 [g/cm$^3$], 0.09 [g/cm$^3$], 0.1 [g/cm$^3$], 0.13 [g/cm$^3$], and 0.2 [g/cm$^3$] to obtain the oil and fat adsorbing nanofiber aggregates in Examples 1-1 through 1-8. When Examples 1-1 through 1-8 were applied to the above model, the interfiber distance $e_1$ calculated from the formula (5) became 20.3 $\mu$m, 11.1 $\mu$m, 9.4 $\mu$m, 8.2 $\mu$m, 5.8 $\mu$m, 5.4 $\mu$m, 4.5 $\mu$m, and 3.4 $\mu$m.

Comparative Examples 1-1 and 1-2

Using the production device 50 described above, fine fibers 95 with an average fiber diameter of 800 nm were produced from polypropylene as a material. The standard deviation of the fiber diameter was 440 and the coefficient of variation obtained by dividing the standard deviation by the average fiber diameter was 0.55. The deposited fine fibers 95 were formed to have a bulk density of 0.01 [g/cm$^3$] and 0.1 [g/cm$^3$] to obtain the oil and fat adsorbing nanofiber aggregates in Comparative Examples 1-1 and 1-2. When Comparative Examples 1-1 and 1-2 were applied to the above model, the interfiber distance $e_1$ calculated from the formula (5) became 10.8 $\mu$m and 2.9 $\mu$m.

Comparative Examples 2-1 and 2-1

Using the production device 50 described above, fine fibers 95 with an average fiber diameter of 4450 nm were produced from polypropylene as a material. The standard deviation of the fiber diameter was 2280 and the coefficient of variation obtained by dividing the standard deviation by the average fiber diameter was 0.51. The deposited fine fibers 95 were formed to have a bulk density of 0.01 [g/cm$^3$] and 0.1 [g/cm$^3$] to obtain the oil and fat adsorbing nanofiber aggregates in Comparative Examples 2-1 and 2-2. When Comparative Examples 2-1 and 2-2 were applied to the above model, the interfiber distance $e_1$ calculated from the formula (5) became 60.2 $\mu$m and 16.0 $\mu$m.

Comparative Examples 3-1 and 3-2

Using the production device 50 described above, fine fibers 95 with an average fiber diameter of 7700 nm were produced from polypropylene as a material. The standard deviation of the fiber diameter was 4360 and the coefficient of variation obtained by dividing the standard deviation by the average fiber diameter was 0.57. The deposited fine fibers 95 were formed to have a bulk density of 0.01 [g/cm$^3$] and 0.1 [g/cm$^3$] to obtain the oil and fat adsorbing nanofiber aggregates in Comparative Examples 3-1 and 3-2. When Comparative Examples 3-1 and 3-2 were applied to the above model, the interfiber distance $e_1$ calculated from the formula (5) became 104.1 $\mu$m and 27.7 $\mu$m.

Comparative Example 4

Using the production device 50 described above, fine fibers 95 with an average fiber diameter of 1500 nm were produced from polypropylene as a material. The standard deviation of the fiber diameter was 900 and the coefficient of variation obtained by dividing the standard deviation by the average fiber diameter was 0.60. The deposited fine fibers 95 were formed to have a bulk density of 0.3 [g/cm$^3$] to obtain the oil and fat adsorbing nanofiber aggregate in Comparative Example 4. When Comparative Example 4 was applied to the above model, the interfiber distance $e_1$ calculated from the formula (5) became 2.5 $\mu$m.

Comparative Example 5

Using the production device 50 described above, fine fibers 95 with an average fiber diameter of 1500 nm were produced from polypropylene as a material. The standard deviation of the fiber diameter was 900 and the coefficient of variation obtained by dividing the standard deviation by the average fiber diameter was 0.60. The deposited fine fibers 95 were formed to have a bulk density of 0.49 [g/cm$^3$] to obtain the oil and fat adsorbing nanofiber aggregate in Comparative Example 5. When Comparative Example 5 was applied to the above model, the interfiber distance $e_1$ calculated from the formula (5) became 1.6 $\mu$m.

In Examples and Comparative Examples above, the coefficients of variation in fiber diameter ranged from 0.55 to 0.60 and were substantially identical.

Table 1 presents a list of configurations in Examples and Comparative Examples above.

[Table 1]

| | Average Fiber Diameter [nm] | Bulk Density [g/cm$^3$] | Porosity | Interfiber Distance [$\mu$m] |
|---|---|---|---|---|
| Example 1-1 | 1500 | 0.01 | 0.9888 | 20.3 |
| Example 1-2 | 1500 | 0.03 | 0.9665 | 11.1 |
| Example 1-3 | 1500 | 0.04 | 0.9553 | 9.4 |
| Example 1-4 | 1500 | 0.05 | 0.9441 | 8.2 |
| Example 1-5 | 1500 | 0.09 | 0.8994 | 5.8 |
| Example 1-6 | 1500 | 0.1 | 0.8883 | 5.4 |
| Example 1-7 | 1500 | 0.13 | 0.8547 | 4.5 |
| Example 1-8 | 1500 | 0.2 | 0.7765 | 3.4 |
| Comparative Example 1-1 | 800 | 0.01 | 0.9888 | 10.8 |
| Comparative Example 1-2 | 800 | 0.1 | 0.8883 | 2.9 |
| Comparative Example 2-1 | 4450 | 0.01 | 0.9888 | 60.2 |
| Comparative Example 2-2 | 4450 | 0.1 | 0.8883 | 16.0 |
| Comparative Example 3-1 | 7700 | 0.01 | 0.9888 | 104.1 |
| Comparative Example 3-2 | 7700 | 0.1 | 0.8883 | 27.7 |
| Comparative Example 4 | 1500 | 0.3 | 0.6648 | 2.5 |
| Comparative Example 5 | 1500 | 0.49 | 0.4525 | 1.6 |

Verification 1: Relationship 1 between Average Fiber Diameter and Suction rate

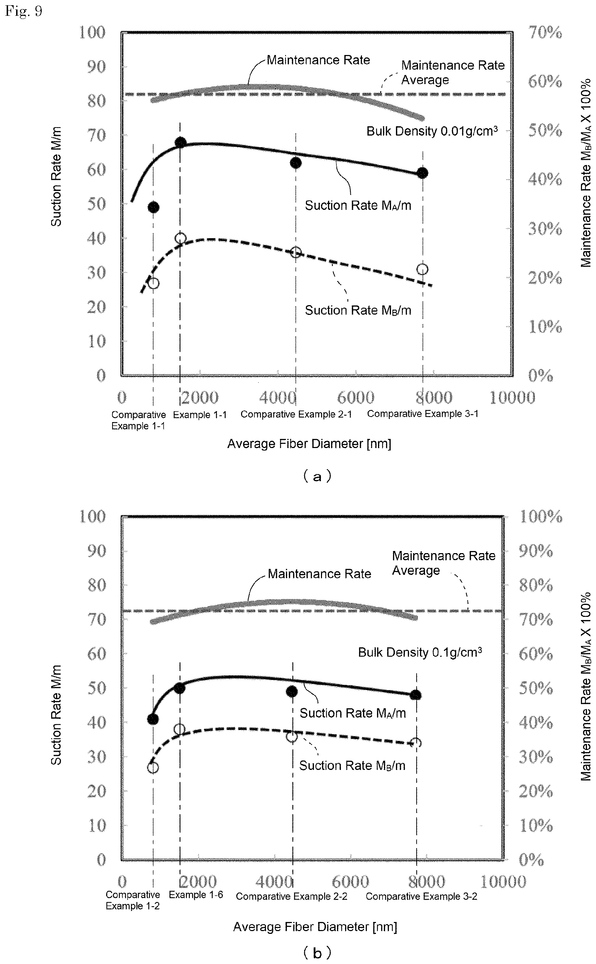

Using Examples 1-1 and 1-6 and Comparative Examples 1-1, 1-2, 2-1, 2-2, 3-1, and 3-2 above, cylindrical test pieces with a diameter of 18 mm and a height of 2 mm were prepared to measure the mass m before oil and fat adsorption for each using a high precision electronic balance. The test pieces were then immersed in oil to be adsorbed (machine oil (ISOVG: 46) produced by TRUSCO, specific gravity $\rho_o$ = 850 kg/m$^3$, contact angle from 29 to 35 degrees). After sufficient time for saturation of the oil adsorption amount, the test pieces were taken out of the oil and placed on a wire gauze to naturally drop the adsorbed oil. Then, using a high precision electronic balance, a mass $M_A$ immediately (0 seconds) after taken out of the oil and a mass $M_B$ 30 seconds after taken out were measured. Values obtained by dividing the mass $M_A$ and the mass $M_B$ by the mass m were defined as suction rates M/m ($M_A$/m, $M_B$/m). A value obtained by dividing the mass $M_B$ by the mass $M_A$ and then multiplied by 100 was defined as a maintenance rate $M_B/M_A \times 100$ [%]. Fig. 9A illustrates the relationship of average fiber diameter with suction rate and maintenance rate in Example 1-1 and Comparative Examples 1-1, 2-1, and 3-1. Fig. 9B illustrates the relationship of average fiber diameter with suction rate and maintenance rate in Example 1-6 and Comparative Examples 1-2, 2-2, and 3-2.

As clearly seen from Figs. 9A and 9B, Examples 1-1 and 1-2 exhibited excellent suction rates compared with those in Comparative Examples 1-1, 1-2, 2-1, 2-2, 3-1, and 3-2. In particular, both suction rates $M_A$/m and $M_B$/m became relatively high for an average fiber diameter from 1000 nm to 2000 nm and reached the respective peaks for an average fiber diameter around 1500 nm.

Verification 2: Relationship 2 between Thickness of Fiber Aggregate and Suction Rate

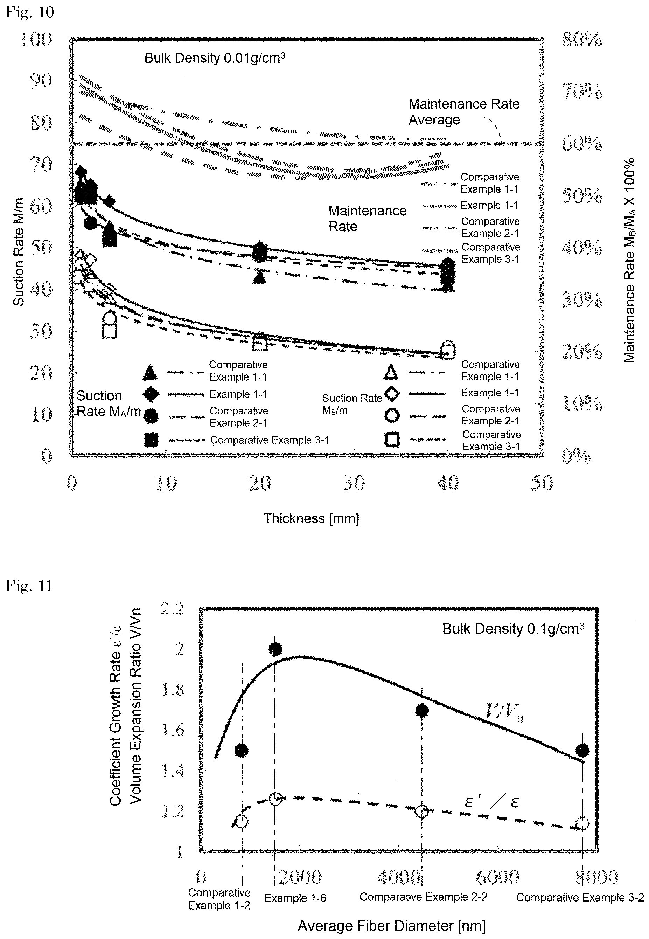

Using Example 1-1 and Comparative Examples 1-1, 2-1, and 3-1 above, cylindrical test pieces with a diameter of 18 mm and a height (thickness t) of 1 mm, 2 mm, 4 mm, 20 mm, and 40 mm were prepared to measure the mass m before oil and fat adsorption for each using a high precision electronic balance. The test pieces were then immersed in oil to be adsorbed (machine oil (ISOVG: 46) produced by TRUSCO, specific gravity $\rho_o$ = 850 kg/m$^3$, contact angle from 29 to 35 degrees). After sufficient time for saturation of the oil adsorption amount, the test pieces were taken out of the oil and placed on a wire gauze to naturally drop the adsorbed oil. Then, using a high precision electronic balance, the mass $M_A$ immediately (0 seconds) after taken out of the oil and the mass $M_B$ 30 seconds after taken out were measured. Values obtained by dividing the mass $M_A$ and the mass $M_B$ by the mass m were defined as the suction rates M/m ($M_A$/m, $M_B$/m). A value obtained by dividing the mass $M_B$ by the mass $M_A$ and then multiplied by 100 was defined as the maintenance rate $M_B/M_A \times 100$[%]. Fig. 10 illustrates the relationship of thickness of each test piece with suction rate and maintenance rate in Example 1-1 and Comparative Examples 1-1, 2-1, and 3-1.

As clearly seen from Fig. 10, Example 1-1 exhibited the highest suction rate for any height of the test pieces. For any average fiber diameter, a smaller thickness of the test piece resulted in a higher suction rate. This is considered because, while the fibers in a lower portion of each test piece supports those in an upper portion, the oil in the lower portion comes out of the test piece due to the oil in the upper portion and a greater thickness of the test piece results in a greater amount of the oil to come out. In addition, a smaller thickness of the test piece failed to sufficiently secure the amount of oil and fat to be adsorbed while exhibiting a high suction rate. For these reasons, the oil and fat adsorbing nanofiber aggregate preferably has the thickness t satisfying a formula (iii) below.

$$(iii) \quad 2 \text{ mm} \leq t \leq 5 \text{ mm}$$

Verification 3: Relationship of Average Fiber Diameter with Coefficient Growth Rate and Volume Expansion Ratio

Using Example 1-6 and Comparative Examples 1-2, 2-2, and 3-2 above, cylindrical test pieces with a diameter of 18 mm and a height of 2 mm were prepared to measure the mass m before oil and fat adsorption for each using a high precision electronic balance. The test pieces were then immersed in oil to be adsorbed (machine oil (ISOVG: 46) produced by TRUSCO, specific gravity $\rho_o$ = 850 kg/m$^3$, contact angle from 29 to 35 degrees). After sufficient time for saturation of the oil adsorption amount, the test pieces were taken out of the oil and placed on a wire gauze to naturally drop the adsorbed oil. Then, using a high precision electronic balance, a mass M five minutes after taken out of the oil was measured. The mass m and the mass M were applied to the formulae (8) through (10) above to obtain a coefficient growth rate $\varepsilon'/\varepsilon$. Then, from the coefficient growth rate $\varepsilon'/\varepsilon$, a volume expansion ratio V/Vn was obtained. Fig. 11 illustrates the relationship of an average fiber diameter with coefficient growth rate and volume expansion ratio in Example 1-6 and Comparative Examples 1-2, 2-2, and 3-2.

As clearly seen from Fig. 11, Example 1-2 exhibited excellent coefficient growth rate and volume expansion ratio compared with those in Comparative Examples 1-2, 2-2, and 3-2. In addition, both the coefficient growth rate and the volume expansion ratio became relatively high for an average fiber diameter from 1000 nm to 2000 nm and reached the respective peaks of the coefficient growth rate and the volume expansion ratio for an average fiber diameter around 1500 nm.

Verification 4: Relationship between Bulk Density and Suction Rate

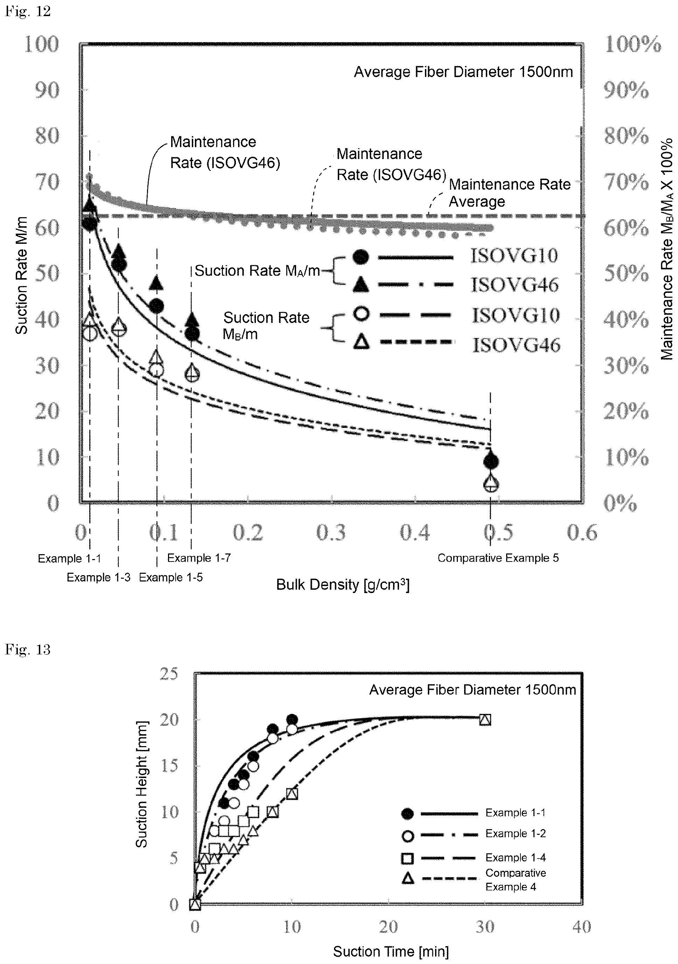

Using Examples 1-1, 1-3, 1-5, and 1-7 and Comparative Example 5 above, cylindrical test pieces with a diameter of 18 mm and a height of 2 mm were prepared to measure the mass m before oil and fat adsorption for each using a high precision electronic balance. The test pieces were then immersed in oil [1] to be adsorbed (machine oil (ISOVG: 46) produced by TRUSCO) and oil [2] to be adsorbed (machine oil (ISOVG: 10) produced by TRUSCO). After sufficient time for saturation of the oil adsorption amount, the test pieces were taken out of the oils and placed on a wire gauze to naturally drop the adsorbed oil. Then, using a high precision electronic balance, the mass $M_A$ immediately (0 seconds) after taken out of the oil and the mass $M_B$ 30 seconds after taken out were measured. Values obtained by dividing the mass $M_A$ and the mass $M_B$ by the mass m were defined as the suction rates M/m ($M_A$/m, $M_B$/m). A value obtained by dividing the mass $M_B$ by the mass $M_A$ and then multiplied by 100 was defined as the maintenance rate $M_B/M_A\times100$ [%]. Fig. 12 illustrates the relationship of bulk density with suction rate and maintenance rate in Examples 1-1, 1-3, 1-5, and 1-7 and Comparative Example 5.

As clearly seen from Fig. 12, regardless of the viscosity of the oils, a smaller bulk density resulted in higher suction rates both $M_A$/m and $M_B$/m. In particular, for a bulk density of 0.2 g/cm$^3$ or less, a smaller bulk density caused even greater degrees of increase in both suction rates.

Verification 5: Relationship between Bulk Density and Suction Speed

Using Examples 1-1, 1-2, and 1-4 and Comparative Example 4 above, cylindrical test pieces with a diameter of 18 mm and a height of 20 mm were prepared. The test pieces were put in a container containing oil to be adsorbed (machine oil (ISOVG: 46) produced by TRUSCO, specific gravity $\rho_o$ = 850 kg/m$^3$, contact angle from 29 to 35 degrees) up to a depth of 1 mm so as to immerse lower portions of the test pieces and a suction height for each piece was measured at each unit time. Fig. 13 illustrates the relationship between suction time and suction height in Examples 1-1, 1-2, and 1-4 and Comparative Example 4.

As clearly seen from Fig. 13, it was found that a smaller bulk density resulted in a higher suction speed to suck up the oil to the height of upper end (20 mm) in a shorter time period. In particular, the suction height reached 15 mm in less than 10 minutes for a bulk density of 0.2 g/cm$^3$ or less and the suction speed was satisfactory.

Verification 6: Relationship between Volume Expansion Ratio and Suction Rate

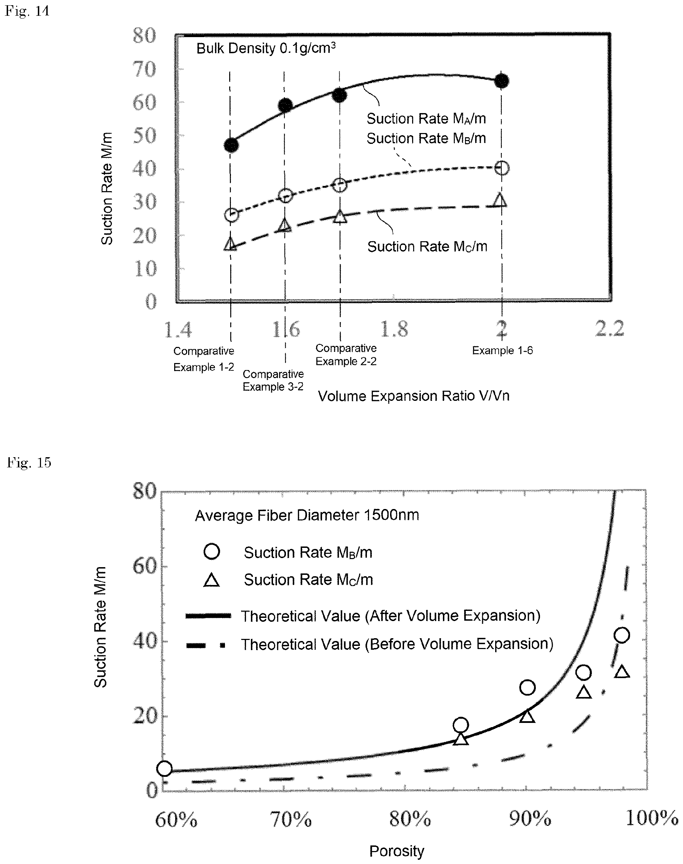

Using Example 1-6 and Comparative Examples 1-2, 2-2, and 3-2 above, cylindrical test pieces with a diameter of 18 mm and a height of 2 mm were prepared to measure the mass m before oil and fat adsorption for each using a high precision electronic balance. The test pieces were then immersed in oil to be adsorbed (machine oil (ISOVG: 46) produced by TRUSCO, specific gravity $\rho_o$ = 850 kg/m$^3$, contact angle from 29 to 35 degrees). After sufficient time for saturation of the oil adsorption amount, the test pieces were taken out of the oil and placed on a wire gauze to naturally drop the adsorbed oil. Then, using a high precision electronic balance, the mass $M_A$ immediately (0 seconds) after taken out of the oil, the mass $M_B$ 30 seconds after taken out, and a mass $M_C$ five minutes after taken out were measured. Values obtained by dividing the mass $M_A$, the mass $M_B$, and the mass $M_C$ by the mass m were defined as the suction rates M/m ($M_A$/m, $M_B$/m, $M_C$/m). The mass m and the mass M were applied to the formulae (8) through (10) above to obtain the coefficient growth rate $\varepsilon'/\varepsilon$. From the coefficient growth rate $\varepsilon'/\varepsilon$, the volume expansion ratio V/Vn was obtained. Fig. 14 illustrates the relationship between volume expansion ratio and suction rate in Example 1-6 and Comparative Examples 1-2, 2-2, and 3-2.

As clearly seen from Fig. 14, both the coefficient growth rate and the volume expansion ratio for an average fiber diameter of 1500 nm resulted in the greatest volume expansion ratio and the highest suction rate and thus the oil was efficiently adsorbed.

From the results of Verifications 1 through 6 above, it was found that the oil and fat adsorbing nanofiber aggregates with an average fiber diameter from 1000 nm to 2000 nm and a bulk density from 0.01 g/cm$^3$ to 0.2 g/cm$^3$ had satisfactory performance of oil and fat adsorption. In particular, it was found that those with an average fiber diameter around 1500 nm (from 1300 nm to 1700 nm) and a bulk density from 0.01 g/cm$^3$ to 0.05 g/cm$^3$ had more satisfactory performance of oil and fat adsorption.

Verification 7: Relationship between Porosity and Suction Rate

A plurality of oil and fat adsorbing nanofiber aggregates with an average fiber diameter of 1500 nm and different porosities (i.e., bulk densities) were prepared to measure the mass m before oil and fat adsorption for each using a high precision electronic balance. The test pieces were then immersed in oil to be adsorbed (machine oil (ISOVG: 46) produced by TRUSCO, specific gravity $\rho_o$ = 850 kg/m³, contact angle from 29 to 35 degrees). After sufficient time for saturation of the oil adsorption amount, the test pieces were taken out of the oil and placed on a wire gauze to naturally drop the adsorbed oil. Then, using a high precision electronic balance, the mass $M_B$ 30 seconds after taken out and the mass $M_C$ five minutes after taken out were measured. Values obtained by dividing the mass $M_B$ and the mass $M_C$ by the mass m were defined as the suction rates M/m ($M_B$/m, $M_C$/m). Using the formula (8) above, a theoretical value of the suction rate relative to the porosity was calculated. Fig. 15 illustrates the relationship of porosity with actually measured values and theoretical values of the suction rate in the oil and fat adsorbing nanofiber aggregate with an average fiber diameter of 1500 nm.

As clearly seen from Fig. 15, the actually measured values roughly coincided with the theoretical values. This allowed approximate estimation of the suction rate M/m from the average fiber diameter and the bulk density (porosity) of the oil and fat adsorbing nanofiber aggregate and the model described above was thus confirmed to be useful.

Although the embodiments of the present invention have been described above, the present invention is not limited to these examples. The above embodiments subjected to addition, deletion, and/or design change of components appropriately by those skilled in the art and those having the characteristics of the embodiments appropriately combined are included in the scope of the present invention as long as including the spirit of the present invention.

Reference Signs List

| | |
|---|---|
| 1 | Oil and Fat Adsorbing Nanofiber Aggregate |
| 7 | Oil and/or Fat |
| 10 | Minimum Calculation Unit |
| 20 | Fiber |
| 20x, 20y, and 20z | Fiber Portion |
| 50 | Production Device |
| 62 | Hopper |
| 63 | Heating Cylinder |
| 64 | Heater |
| 65 | Screw |
| 66 | Motor |
| 68 | Gas Supply Pipe |
| 70 | Head |
| 90 | Collecting Net |
| 95 | Fine Fiber |
| D | Average Fiber Diameter |
| $\rho_b$ | Bulk Density |
| $e_1$ | Interfiber Distance |
| $\eta$ | Porosity |

**Claims**

1.  An oil and fat adsorbing nanofiber aggregate, wherein
    the oil and fat adsorbing nanofiber aggregate satisfies formulae (i) and (ii) below where the oil and fat adsorbing nanofiber aggregate has an average fiber diameter of d and a bulk density of $\rho_b$.

$$(i) \qquad 1000 \text{ nm} \leq d \leq 2000 \text{ nm}$$

$$(ii) \qquad 0.01 \text{ g/cm}^3 \leq \rho_b \leq 0.2 \text{ g/cm}^3$$

2.  The oil and fat adsorbing nanofiber aggregate according to Claim 1, wherein the oil and fat adsorbing nanofiber aggregate further satisfies a formula (i') below.

$$(\text{i'}) \qquad 1300 \text{ nm} \le d \le 1700 \text{ nm}$$

3. The oil and fat adsorbing nanofiber aggregate according to Claim 2, wherein the oil and fat adsorbing nanofiber aggregate further satisfies a formula (ii') below.

$$(\text{ii'}) \qquad 0.01 \text{ g/cm}^3 \le \rho_b \le 0.05 \text{ g/cm}^3$$

4. The oil and fat adsorbing nanofiber aggregate according to Claim 1, wherein the oil and fat adsorbing nanofiber aggregate further satisfies a formula (iii) below where the oil and fat adsorbing nanofiber aggregate has a thickness of t.

$$(\text{iii}) \qquad 2 \text{ mm} \le t \le 5 \text{ mm}$$

5. A method for estimating an oil and fat suction rate, estimating an oil and fat suction rate M/m indicating a ratio of a mass M after oil and fat adsorption to a mass m before oil and fat adsorption in an oil and fat adsorbing nanofiber aggregate, wherein
the method calculates an estimate of the oil and fat suction rate M/m by a formula (iv) below using a porosity $\eta$ of the oil and fat adsorbing nanofiber aggregate, a density $\rho$ of a fiber to constitute the oil and fat adsorbing nanofiber aggregate, and an oil and fat density $\rho_o$.
[Math 1]

$$(\text{iv}) \qquad \frac{M}{m} = 1 + \frac{\eta \rho_o}{(1-\eta)\rho}$$

6. A method for estimating a volume after oil and fat adsorption, estimating a volume V after oil and fat adsorption in an oil and fat adsorbing nanofiber aggregate, wherein
the method calculates an estimate of an oil and fat suction rate M/m indicating a ratio of a mass M after oil and fat adsorption to a mass m before oil and fat adsorption in the oil and fat adsorbing nanofiber aggregate by a formula (iv) below using a porosity $\eta$ of the oil and fat adsorbing nanofiber aggregate, a density $\rho$ of a fiber to constitute the oil and fat adsorbing nanofiber aggregate, and an oil and fat density $\rho_o$ and
the method calculates an estimate of the volume V after oil and fat adsorption by a formula (v) below using the estimate of the oil and fat suction rate M/m, the mass m before oil and fat adsorption in the oil and fat adsorbing nanofiber aggregate, the density $\rho$ of the fiber to constitute the oil and fat adsorbing nanofiber aggregate, the oil and fat density $\rho_o$.
[Math 2]

$$(\text{iv}) \qquad \frac{M}{m} = 1 + \frac{\eta \rho_o}{(1-\eta)\rho}$$

[Math 3]

$$(\text{v}) \qquad V = \frac{(M/m)m - m}{\rho_o} + \frac{m}{\rho}$$

Fig. 1

（a）

（b）

（c）

Fig. 2

Fig. 3

Fig. 4

Fig. 5

( a )

( b )

Fig. 6

（a）

（b）

（c）

Fig. 7

Fig. 8

Fig. 9

(a)

(b)

Fig. 10

Bulk Density 0.01g/cm³

Thickness [mm]

Fig. 11

Bulk Density 0.1g/cm³

Average Fiber Diameter [nm]

Fig. 12

Fig. 13

Fig. 14

Fig. 15

## INTERNATIONAL SEARCH REPORT

| International application No. |
| --- |
| PCT/JP2018/024743 |

**A. CLASSIFICATION OF SUBJECT MATTER**
Int.Cl. B01J20/28(2006.01)i, B01J20/26(2006.01)i, D04H1/72(2012.01)i, G01N30/00(2006.01)i

According to International Patent Classification (IPC) or to both national classification and IPC

**B. FIELDS SEARCHED**

Minimum documentation searched (classification system followed by classification symbols)
Int.Cl. B01J20/00-20/28, G01N30/00, D04H1/00-18/04

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | 呉魏 他，「ナノファイバー不織布の製造とその基本特性と応用に関する考察」，日本機械学会講演論文集，13 March 2017, no. 174-1, pp. 130-133, non-official translation (WU, Wei et al., "Investigation of Production of Nano Fiber Non-woven Fabric and Its Base Features for Applications", Lecture proceedings of the Japan Society of Mechanical Engineers) | 1-2, 4<br>3<br>5-6 |
| Y<br>A | JP 2000-005597 A (KURITA WATER INDUSTRIES LTD.) 11 January 2000, claims, paragraphs [0006]-[0008] (Family: none) | 3<br>5-6 |

☒ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 07 September 2018 (07.09.2018) | 18 September 2018 (18.09.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/024743

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-184095 A (TAMARU SEISAKUSHO KK) 19 September 2013, claims, paragraphs [0017]-[0022] (Family: none) | 1-6 |
| A | Microfilm of the specification and drawings annexed to the request of Japanese Utility Model Application No. 133286/1989 (Laid-open No. 074695/1991) (KURARAY CO., LTD.) 26 July 1991, claims, page 6, lines 8-19 (Family: none) | 1-6 |

Form PCT/ISA/210 (continuation of second sheet) (January 2015)

## INTERNATIONAL SEARCH REPORT

| International application No. |
| --- |
| PCT/JP2018/024743 |

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2018/024743 |

<Continuation of Box III>

The invention in claims 1-4 shares with the invention in claims 5 and 6 the technical feature of a "nanofiber integrated body for adsorbing oils/fats".

However, the nanofiber integrated body for adsorbing oils/fats was already well-known at the time of filing of this application as disclosed in Japanese Unexamined Patent Application Publication No. 2013-184095, which is disclosed as a prior art document in the specification of this application, and thus does not make a contribution over the prior art. Accordingly, said technical feature cannot be said to be a special technical feature.

In addition, the claims include the two inventions (groups) below.

(Invention 1) (Claims 1-4)

A nanofiber integrated body for adsorbing oils/fats, wherein, when the average fiber diameter of the nanofiber integrated body is d and the volume density of the nanofiber integrated body is $\rho b$, the nanofiber integrated body satisfies conditions (i) and (ii) below:

(i) $1000 \text{ nm} \leqq d \leqq 2000 \text{ nm}$

(ii) $0.01 \text{ g/cm}^3 \leqq \rho b \leqq 0.2 \text{ g/cm}^3$.

(Invention 2) (Claims 5 and 6)

An oils/fats adsorption rate estimation method by which the adsorption rate M/m of oils/fats (where m is the mass of a nanofiber integrated body before oils/fats are adsorbed and M is the mass of a nanofiber integrated body after oils/fats are adsorbed) is estimated, the method comprising

a step for calculating an estimated value of the adsorption rate M/m of oils/fats from formula (iv) below using the porosity $\eta$ of the nanofiber integrated body, the density $\rho$ of the fibers constituting the nanofiber integrated body, and the density $\rho o$ of oils/fats:

(iv) $M/m = 1 + \eta\rho o/\{(1-\eta)\rho\}$.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013184095 A
- JP 2015065171 A
- JP 6047786 B

**Non-patent literature cited in the description**

- **YUEHUA YUAN ; T. RANDALL LEE.** Contact Angle and Wetting Properties. *Surface Science Techniques,* 2013, ISBN 978-3-642-34242-4, 3-34
- Controlling water on polypropylene surfaces with micro- and micro/nanostructures. **TIINA RASILAINEN.** Department of CHEMISTRY. University of Eastern Finland, 2010
- **THAWATCHAI PHAECHAMUD ; CHIRAYU SAVEDKAIROP.** Contact Angle and Surface Tension of Some Solvents Used in Pharmaceuticals. *Research Journal of Pharmaceutical, Biological and Chemical Sciences,* 2012, vol. 3 (4), ISSN 0975-8585, 513-529
- **KEIZO OGINO ; KEN-ICHI SHIGEMURA.** Studies of the Removal of Oily Soil by Rolling-up in Detergency. II. On Binary Soil Systems Consisting of Oleic Acid and Liquid Paraffin. *BULLETIN OF THE CHEMICAL SOCIETY OF JAPAN,* 1976, vol. 49 (11), 3236-3238
- **VICTORIA BROJE ; ARTURO A. KELLER.** Interfacial interactions between hydrocarbon liquids and solid surfaces used in mechanical oil spill recovery. *Journal of Colloid and Interface Science,* 2007, vol. 305, 286-292